# EUROPEAN PATENT APPLICATION

(11) **EP 4 455 978 A1**
(43) Date of publication of application: **30.10.2024**
(21) Application number: 22911191.9
(22) Date of filing: 19.12.2022
(51) Int. Cl.: G06Q 50/08

(54) **PROCESS PLAN CREATION SYSTEM FOR WATER PIPE WORK, PROCESS PLAN CREATION METHOD, AND PROGRAM FOR PROCESS PLAN CREATION**

(30) Priority: 24.12.2021 JP 2021210631
(71) Applicant: Kubota Corporation, Osaka 556-8601 (JP)
(72) Inventor: UCHIKOSHI Satoru, Tokyo 104-8307 (JP); KAGEYAMA Hayato, Amagasaki-shi, Hyogo 660-0095 (JP); ITO Kazuya, Amagasaki-shi, Hyogo 660-0095 (JP)
(74) Representative: Grünecker Patent- und Rechtsanwälte PartG mbB
(86) International application number: PCT/JP2022/046724
(87) International publication number: WO 2023/120489

(57) **Abstract**

A process plan creation system capable of easily creating a process plan of water pipe construction is obtained. A process plan creation system 1 includes: an information acquirer 11 that acquires water pipe-related information related to at least one of a diameter, a length, a type, the number, or arrangement of water pipes W used for water pipe construction; a process time calculator 21 that calculates a process time including a work time of each process of the water pipe construction based on the water pipe-related information acquired by the information acquirer 11; and a process plan creator 31 that creates a process plan of at least a part of the water pipe construction by using the process time of each process calculated by the process time calculator 21.

## Description

### TECHNICAL FIELD

The present teaching relates to a process plan creation system for creating a process plan of water pipe construction, a process plan creation method, and a program for creating a process plan.

### BACKGROUND ART

In general, a process plan is created in construction, and work proceeds according to the created plan. As a construction process creation system, as disclosed in Patent Document 1, for example, a known construction process creation system includes a calculation unit to calculate a construction period of each of construction works for each of construction sections based on a construction physical quantity of a construction object for each of the construction sections, a man-hour coefficient indicating a proportion of a man-hour to the construction physical quantity in the construction sections and the construction works, a difficulty coefficient, and a modularization percentage indicating a percentage of the number of assembly locations in a module assembled in advance at a place different from the construction section to the total number of assembly locations in the construction section.

### CITATION LIST

### PATENT DOCUMENT

Patent Document 1: Japanese Patent No. 5665759

### SUMMARY OF INVENTION

### TECHNICAL PROBLEM

In the construction process creation system of Patent Document 1, a construction time is calculated based on the construction physical quantity of the construction object, the man-hour coefficient, the difficulty coefficient, and the modularization percentage. However, in the case of water pipe construction, modularization is difficult, and after excavating the ground at the site, water pipes need to be connected underground and backfilled one by one. Thus, in water pipe construction, the process significantly changes depending on, for example, the diameter, length, and type of each pipe and the number or arrangement of water pipes.

For the foregoing reasons, simple process calculations are difficult in water pipe construction, and processes have been created manually based on experience and knowledge of skilled operators. This process of water pipe construction requires significant time for skilled operators and cannot be created easily.

It is therefore an object of the present teaching to achieve a process plan creation system capable of easily creating a process plan of water pipe construction.

### SOLUTION TO PROBLEM

A water pipe construction process plan creation system according to one embodiment of the present teaching creates a process plan of water pipe construction. The process plan creation system includes: an information acquirer that acquires water pipe-related information related to at least one of a diameter, a length, a type, the number, or arrangement of water pipes used for the water pipe construction; a process time calculator that calculates a process time including a work time of each process of the water pipe construction based on the water pipe-related information acquired by the information acquirer; and a process plan creator that creates a process plan of at least a part of the water pipe construction by using the process time of each process calculated by the process time calculator. (first configuration)

With the configuration described above, the process time of each process of water pipe construction is calculated based on the water pipe-related information, and a process plan of at least a part of water pipe construction is created by using the calculated process time. Accordingly, the process plan of water pipe construction can be automatically created easily. The process plan includes at least one of a daily process plan or a total process plan. The total process plan refers to a process plan from the start to the end of water pipe construction, and includes a weekly process plan, a monthly process plan, an annual process plan, and so forth.

In the first configuration, the information acquirer acquires water pipe construction-related information related to the water pipe construction, in addition to the water pipe-related information. The process time calculator calculates the process time by using the water pipe-related information and the water pipe construction-related information acquired by the information acquirer. (second configuration)

With this configuration, the process plan of water pipe construction can be created by using the water pipe construction-related information related to water pipe construction, in addition to the water pipe-related information. Thus, the process plan of water pipe construction can be more accurately created.

In the second configuration, the water pipe construction-related information includes on-ground-related information including information related to on-ground of a place where the water pipes are buried, and underground-related information including information related to underground of the place where the water pipes are buried. (third configuration).

With this configuration, a process time of each process of water pipe construction can be calculated in consideration of the on-ground-related information and the underground-related information significantly affecting water pipe construction. Thus, the process plan of water pipe construction can be more accurately created.

In the third configuration, the on-ground-related information includes on-ground periphery-related information related to a periphery of on-ground of the place where the water pipes are buried, and road situation-related information related to a road situation of the place where the water pipes are buried. (fourth configuration)

With this configuration, a process time of each process of water pipe construction can be calculated in consideration of the on-ground periphery-related information and the road situation-related information in the on-ground-related information significantly affecting water pipe construction. Thus, the process plan of water pipe construction can be more accurately created.

In the third or fourth configuration, the underground-related information includes information related to at least one of an underground obstacle, a road structure, soil quality, or groundwater. (fifth configuration)

With this configuration, a process time of each process of water pipe construction can be calculated in consideration of information related to at least one of an underground obstacle, a road structure, soil quality, or groundwater significantly affecting water pipe construction. Thus, the process plan of water pipe construction can be more accurately created.

In any one of the second through fifth configurations, the process time calculator calculates a spare time in each process of the water pipe construction based on the water pipe-related information and the water pipe construction-related information. The process plan creator creates a process plan of at least a part of the water pipe construction in consideration of the spare time as well as the process time of each process. (sixth configuration)

With this configuration, even in cases such as a case where the process is changed because of an unexpected underground buried object or a case where the process is changed because of on-ground situations (such as a case where there is a time zone in which construction cannot be conducted at an entrance of a parking lot or a store), a process plan of water pipe construction can be created in consideration of a risk of such cases. Thus, the process plan of water pipe construction can be more accurately created.

In the sixth configuration, the process time calculator includes a spare time corrector that corrects the spare time in each process of the water pipe construction based on past performance. (seventh configuration)

With this configuration, the spare time in each process of water pipe construction can be accurately obtained based on past performance. For example, since parameters related to water pipe construction differ among construction sites, the spare time is corrected in accordance with the parameters so that past performance can be reflected on the spare time. In addition, the spare time is corrected based on information such as past weather data in periods of water pipe construction, and thus, the spare time can be more accurately obtained.

Accordingly, the process plan of water pipe construction can be more accurately created by using the corrected spare time.

In any one of the second through seventh configurations, the information acquirer acquires construction suspension-related information related to a date when no water pipe construction is performed, as the water pipe construction-related information. The process plan creator creates a process plan of at least a part of the water pipe construction by using the construction suspension-related information acquired by the information acquirer and the process time of each process calculated by the process time calculator. (eighth configuration)

With this configuration, a process of water pipe construction can be created except for a period or a time zone in which water pipe construction is suspended. Thus, the process plan of water pipe construction can be more accurately created.

In any one of the first through eighth configurations, the water pipe construction process plan creation system further includes: a progress status-related information acquirer that acquires progress status-related information related to a progress status of the water pipe construction; and a process plan modifier that modifies the process plan created by the process plan creator, by using the progress status-related information acquired by the progress status-related information acquirer. (ninth configuration)

With this configuration, the process plan of water pipe construction can be modified in accordance with the actual progress status of water pipe construction. Thus, the process plan of water pipe construction can be more accurately created in accordance with an actual situation.

A process plan creation method of water pipe construction according to one embodiment of the present teaching is a method for creating a process plan of water pipe construction. The process plan creation method includes: an information acquisition step of acquiring water pipe-related information related to at least one of a diameter, a length, a type, the number, or arrangement of water pipes used for the water pipe construction; a process time calculation step of calculating a process time including a work time of each process of the water pipe construction based on the water pipe-related information acquired in the information acquisition step; and a process plan creation step of creating a process plan of at least a part of the water pipe construction by using the process time of each process calculated in the process time calculation step. (first method)

With this method, the process time of each process of water pipe construction is calculated based on the water pipe-related information, and a process plan of at least a part of water pipe construction is created by using the calculated process time. Accordingly, the process plan of water pipe construction can be automatically created easily.

A program for creating a process plan of water pipe construction according to one embodiment of the present teaching is a program for creating a process plan of water pipe construction. This program causes a computer to acquire water pipe-related information related to at least one of a diameter, a length, a type, the number, or arrangement of water pipes used for the water pipe construction; to calculate a process time including a work time of each process of the water pipe construction based on the acquired water pipe-related information; and to create a process plan of at least a part of the water pipe construction by using the calculated process time of each process. (tenth configuration)

With this configuration, the process time of each process of water pipe construction is calculated based on the water pipe-related information, and a process plan of at least a part of water pipe construction is created by using the calculated process time. Accordingly, the process plan of water pipe construction can be automatically created easily.

### ADVANTAGEOUS EFFECTS OF INVENTION

A water pipe construction process plan creation system according to one embodiment of the present teaching calculates a process time including a work time of each process in water pipe construction based on water pipe-related information related to at least one of a diameter, a length, a type, the number, or arrangement of water pipes used for water pipe construction, and creates a process plan of at least a part of water pipe construction by using the calculated process time of each process.

With this configuration, the process time of each process of water pipe construction is calculated based on the water pipe-related information, and a process plan of at least a part of water pipe construction is created by using the calculated process time. Accordingly, the process plan of water pipe construction can be automatically created easily.

### BRIEF DESCRIPTION OF DRAWINGS

[FIG. 1] FIG. 1 is a functional block diagram illustrating a schematic configuration of a process plan creation system according to a first embodiment.
[FIG. 2] FIG. 2 shows an example of a daily process plan in water pipe construction.
[FIG. 3] FIG. 3 shows an example of a monthly process plan in water pipe construction.
[FIG. 4] FIG. 4 schematically illustrates a state where the ground is excavated with a work machine.
[FIG. 5] FIG. 5 schematically illustrates a state where water pipes are placed in a trench formed by excavation.
[FIG. 6] FIG. 6 schematically illustrates a state where water pipes are connected to one another.
[FIG. 7] FIG. 7 schematically illustrates a state where water pipes are buried with a work machine.
[FIG. 8] FIG. 8 illustrates a state where the sides of the trench are retained by sheet piles.
[FIG. 9] FIG. 9 schematically illustrates an overall structure of a road.
[FIG. 10] FIG. 10 schematically illustrates an example of a calculation result of a work time of each process in water pipe construction.
[FIG. 11] FIG. 11 is a flowchart schematically showing a process plan creation method.
[FIG. 12] FIG. 12 is a flowchart schematically showing a method for acquiring water pipe-related information and water pipe construction-related information in the process plan creation method.
[FIG. 13] FIG. 13 is a functional block diagram showing a schematic configuration of a process plan creation system according to a variation of the first embodiment.
[FIG. 14] FIG. 14 is a functional block diagram illustrating a schematic configuration of a process plan creation system according to a second embodiment.
[FIG. 15] FIG. 15 is a flowchart of a process plan creation method executed by the process plan creation system according to the second embodiment.

### DESCRIPTION OF EMBODIMENT

Embodiments will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, expressions such as "fixed," "connected," and "attached" (hereinafter referred to as "fixed or the like") include not only a case where members are directly fixed or the like but also a case where the members are fixed or the like through other members. That is, in the following description, the expression such as "fixed or the like" includes meanings of direct and indirect fixing or the like between members.

### [First Embodiment]

### (Process plan creation system of water pipe construction)

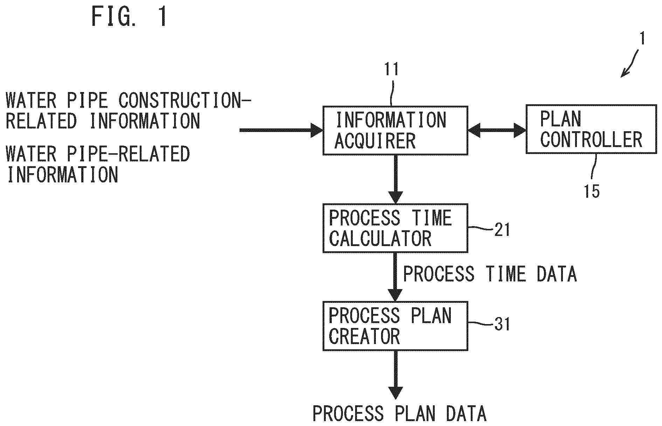

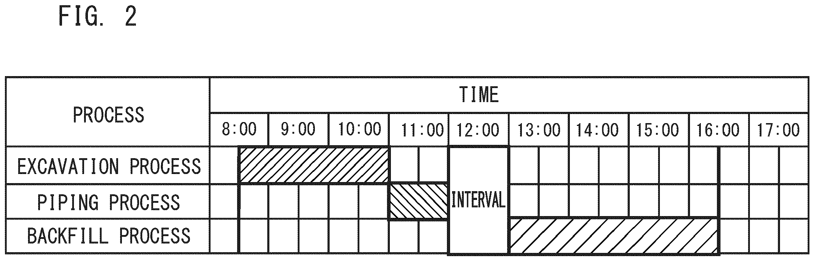

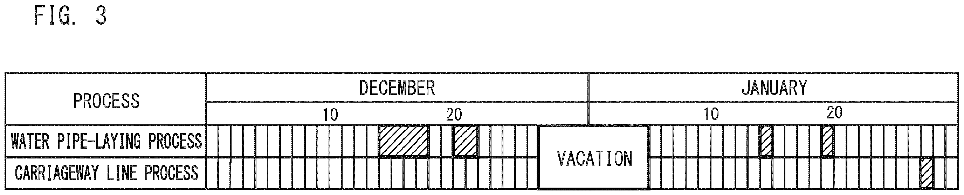

FIG. 1 is a functional block diagram illustrating a schematic configuration of a process plan creation system 1 according a first embodiment of the present teaching. The process plan creation system 1 creates and outputs a daily or monthly process plan of water pipe construction as shown in FIGS. 2 and 3. The process plan creation system 1 may be, for example, a computer, or may include a computer and a portable terminal capable of transmitting and receiving data to/from the computer through a communication device.

The water pipe construction means construction of burying water pipes W in the ground. The water pipe construction includes construction of exchanging water pipes W buried in the ground as well as construction of burying new water pipes W in the ground. In the water pipe construction, the construction of burying new water pipes W in the ground includes a water pipe-laying process. The water pipe-laying process includes a daily process and a monthly process. The daily process includes an excavation process, a piping process, and a backfill process. The monthly process includes the daily processes for the number of process days. The monthly process may include, for example, a carriageway line process of drawing lines such as carriageway lines on the road surface. As the water pipe construction, construction of burying new water pipes W in the ground will be described hereinafter.

It should be noted that the construction of exchanging water pipes W in the water pipe construction includes an excavation process, a pipe removing process, a piping process, and a backfill process in the daily process.

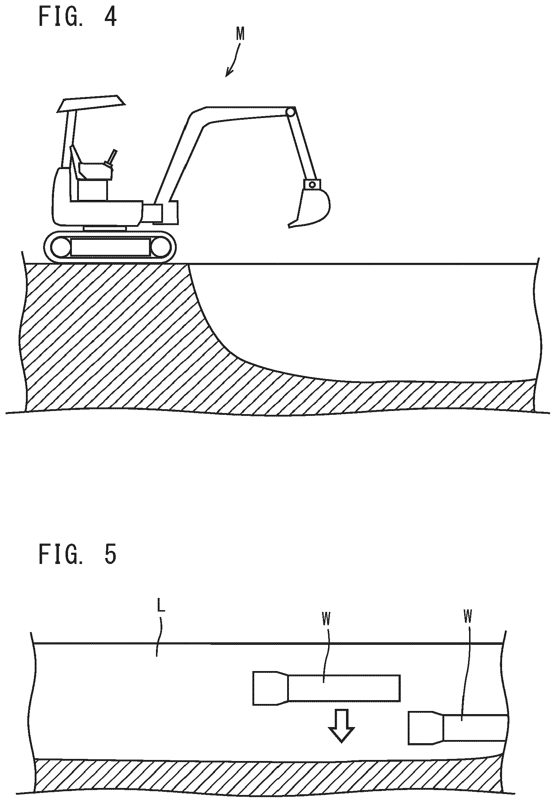

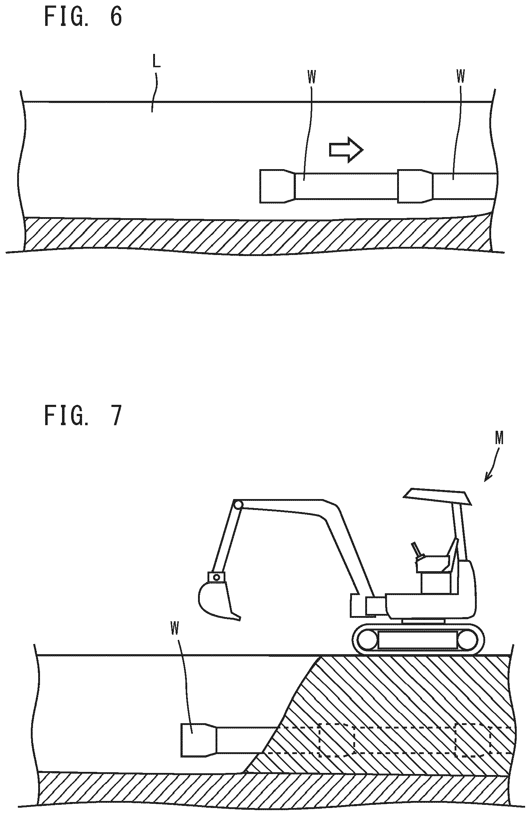

Processes in the daily water pipe construction will be briefly described with reference to FIGS. 4 through 7. FIG. 4 schematically illustrates a state where the ground is excavated with a work machine M. FIG. 5 schematically illustrates a state where water pipes W are placed in a trench L formed by excavation. FIG. 6 schematically illustrates a state where water pipes W are connected to one another. FIG. 7 schematically illustrates a state where water pipes Ware buried with a work machine M.

In water pipe construction, first, an excavation process of excavating the ground with the work machine M is performed, as illustrated in FIG. 4. Although not particularly shown in FIG. 4, the ground surface is paved with asphalt. Thus, in the excavation process, the work machine M excavates the asphalt and then excavates the ground. In the excavation process, the ground is excavated to form the trench L such that water pipes W can be placed in the trench L.

Next, as illustrated in FIG. 5, water pipes W are placed in the trench L formed by excavation. The water pipes W are conveyed into the trench L with, for example, a work machine M. The water pipes W conveyed into the trench L are connected to one another, as illustrated in FIG. 6. The process of conveying the water pipes W into the trench L and connecting the water pipes W to one another in this manner is a piping process.

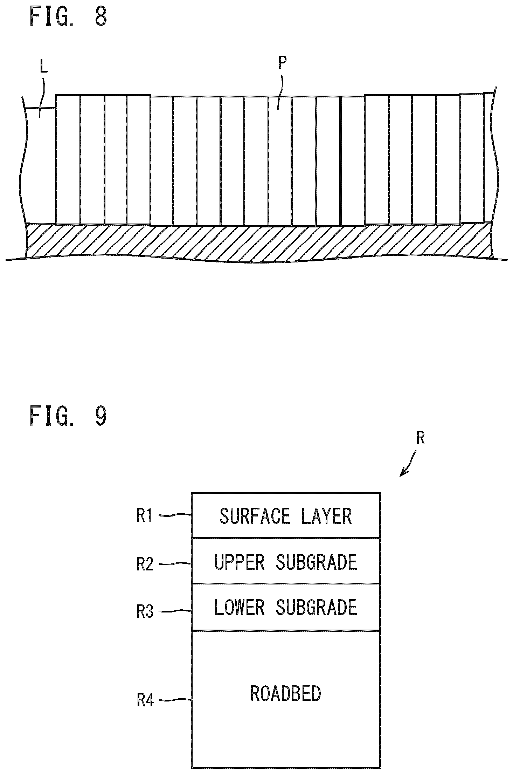

Thereafter, in the water pipe construction, a backfill process of backfilling the connected water pipes W in the trench L with the work machine M is performed as illustrated in FIG. 7. FIG. 9 schematically illustrates an overall structure of a road R. The road R sequentially includes a surface layer R1, an upper subgrade R2, a lower subgrade R3, and a roadbed R4 in this order from the top. In the case of backfilling the water pipes W in the trench L, the trench L is backfilled in the order of the roadbed R4, the lower subgrade R3, the upper subgrade R2, and the surface layer R1 such that the road has a structure illustrated in FIG. 9.

In the water pipe construction, an earth retaining process as illustrated in FIG. 8 may be performed after the excavation process. In this earth retaining process, the sides of the trench L excavated in the excavation process are reinforced with sheet piles P. In the earth retaining process, the entire sides of the trench L may be reinforced or the sides of the trench L may be partially reinforced.

As illustrated in FIG. 1, the process plan creation system 1 includes an information acquirer 11, a plan controller 15, a process time calculator 21, and a process plan creator 31.

The information acquirer 11 acquires water pipe-related information and water pipe construction-related information. The water pipe-related information includes information related to at least one of the diameter, length, type (e.g., straight pipe, specially shaped pipe, T-shaped pipe, or cut pipe, etc.), number, or arrangement of water pipes used in water pipe construction. The water pipe-related information is, for example, information obtained from a pipe conduit diagram of water pipes or the like. That is, the water pipe-related information may be automatically obtained from a device that generates the pipe conduit diagram, for example. The water pipe-related information may be obtained by input or may be obtained from a result calculated by a calculator.

The water pipe construction-related information includes information related to water pipe construction. Specifically, the water pipe construction-related information includes information related to on-site conditions. The information related to on-site conditions includes information on at least one of a workable time, the number of available persons, the type and number of work machines used, feasibility of parallel work, feasibility of parallel use of work machines, the conveyance time of soil or water pipes, whether test excavation is required or not, or other information.

The water pipe construction-related information includes on-ground-related information and underground-related information. The on-ground-related information includes information related to on-ground of a place where water pipes are buried. Specifically, the on-ground-related information includes on-ground periphery-related information and road situation-related information. The on-ground periphery-related information includes information related to environments near the place where water pipe construction is performed (facilities such as houses, stores, and parking lots facing the construction site, urban or suburban construction site, etc.). The road situation-related information includes traffic information in a place where water pipe construction is performed and, in a case where the water pipe construction is performed on a road, information on at least one of the width or the number of lanes of the road.

The underground-related information includes information related to underground of the place where water pipes are buried. Specifically, the underground-related information includes information related to at least one of an underground obstacle (an underground structure such as crossing pipes, other underground buried objects, etc.), a road structure, soil quality, or groundwater.

That is, the underground-related information may include information related to the type, size, position, and so forth of the underground obstacle. The underground-related information may include information related to road structures such as the thickness and characteristics of pavement and subgrade. The underground-related information may include information related to soil quality (sand, silt, clay, etc.) at the excavation position. The underground-related information may include information related to the position and amount of groundwater. The underground-related information may include information related to necessity of earth retaining, the type of earth retaining (aluminium sheet piles, wooden sheet piles, lightweight steel sheet piles, H-steel horizontal sheet piles, etc.), an earth retaining technique (installation, driving, etc.), and the position and area of earth retaining.

The information acquirer 11 also acquires information related to a construction period, a constructible date, and so forth, as the water pipe construction-related information. The information related to the construction period and the constructible date acquired by the information acquirer 11 is used in creating a process plan by the process plan creator 31.

The information acquirer 11 may acquire construction suspension-related information related to a date when no water pipe construction is performed, as the water pipe construction-related information. In this case, the process plan creator 31 creates a process plan of at least a part of water pipe construction by using the construction suspension-related information acquired by the information acquirer 11 and a process time of each process calculated by the process time calculator 21 described later.

Based on the water pipe-related information and the water pipe construction-related information acquired by the information acquirer 11, the plan controller 15 determines construction conditions necessary for creating a process plan of water pipe construction in information not obtained by the information acquirer 11. Specifically, the plan controller 15 selects a work range calculated by the process time calculator 21 described later, and determines conditions for earth retaining construction (necessity, application range, etc.) and conditions for test excavation (necessity, the number of test excavation sites, etc.). The work range selected by the plan controller 15, and the conditions for earth retaining construction and conditions for test excavation determined by the plan controller 15 are output to the process time calculator 21 as a part of the water pipe construction-related information.

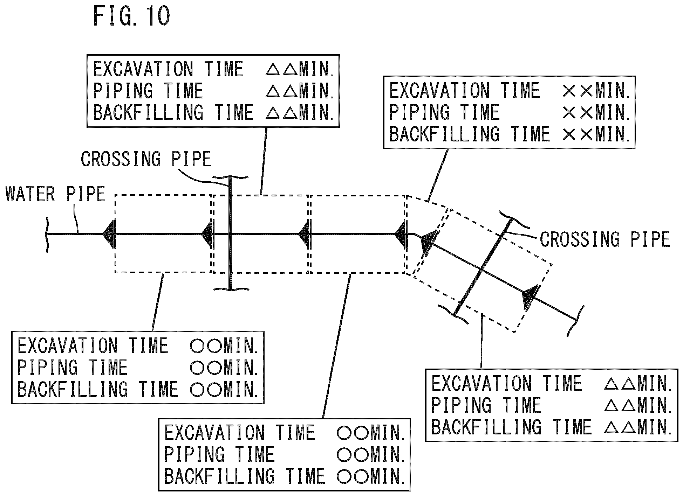

Based on the water pipe-related information and the water pipe construction-related information acquired by the information acquirer 11, the process time calculator 21 calculates a process time including a work time of each process of water pipe construction. The process time calculator 21 calculates a work time necessary for burying one water pipe, based on the water pipe-related information and the water pipe construction-related information, for example. FIG. 10 schematically illustrates an example of a calculation result of a work time of each process in water pipe construction. FIG. 10 shows a work time of each process together with a pipe conduit of water pipes for description. The process plan creation system 1 may show a work time of each process together with a pipe conduit of water pipes as shown in FIG. 10, or may show only the work times of processes as a list.

The process time calculator 21 outputs the work time calculated in each process to the process plan creator 31 described later, as process time data.

The process time calculator 21 may calculate a work time necessary for burying one water pipe by using a work time in accordance with the water pipe-related information and a work time in accordance with the water pipe construction-related information, or may calculate a work time necessary for burying one water pipe in consideration of a coefficient in accordance with the water pipe-related information and a coefficient in accordance with the water pipe construction-related information with respect to a reference work time.

The process time calculator 21 may calculate a spare time in each process of water pipe construction based on the water pipe-related information and the water pipe construction-related information. The spare time may be included in the water pipe construction-related information, or the process time calculator 21 may calculate the spare time in consideration of a factor of a delay of a process time of each process based on the water pipe-related information and the water pipe construction-related information. For example, the process time calculator 21 may calculate the spare time to process times of excavation and piping, from the probability of presence of an underground obstacle in the underground-related information, for example. That is, the process time calculator 21 may calculate the spare time in consideration of, for example, the probability of occurrence of an event in each process.

The process plan creator 31 creates a process plan of at least a part of water pipe construction by using the process time of each process calculated by the process time calculator 21. The process plan creator 31 creates a process plan as shown in FIG. 2, for example, by using input conditions, such as a construction period and workable date, and the process time of each process.

In the case where the process time calculator 21 calculates the spare time, the process plan creator 31 may create the process plan in consideration of the spare time as well as the process time of each process.

The process plan creator 31 may determine the order of construction sites in a pipe conduit on which water pipe construction is performed. For example, the process plan creator 31 may determine the order of construction sites depending on difficulty of construction.

In the manner described above, the water pipe construction process plan creation system 1 according to this embodiment creates a daily process plan of water pipe construction. The process plan creation system 1 includes: the information acquirer 11 that acquires water pipe-related information related to at least one of the diameter, length, type, number, or arrangement of water pipes W used for water pipe construction; the process time calculator 21 that calculates a process time including a work time of each process of water pipe construction based on the water pipe-related information acquired by the information acquirer 11; and the process plan creator 31 that creates a process plan of at least a part of the water pipe construction by using the process time of each process calculated by the process time calculator 21.

With this configuration, the process time of each process of daily water pipe construction is calculated based on the water pipe-related information, and a process plan of at least a part of daily water pipe construction can be created by using the calculated process time. Accordingly, a daily process plan of water pipe construction can be automatically created easily.

Further, the water pipe construction process plan creation system 1 may create a monthly process plan of water pipe construction as shown in FIG. 3, based on the created daily process plan of water pipe construction. Specifically, the water pipe construction process plan creation system 1 may create a monthly process plan of water pipe construction as shown in FIG. 3 by aggregating daily process plans of water pipe construction created as described above for the same number of days of the construction.

The water pipe construction process plan creation system 1 may create only a daily process plan of water pipe construction or may create only a monthly process plan of water pipe construction. The water pipe construction process plan creation system 1 may create a total process plan including weekly process plans, monthly process plans, and annual process plans, and so forth. A method for calculating a process time of each process in process plans except for daily process plans in water pipe construction is similar to the above-described method for calculating a process time of each process in the daily process plan of water pipe construction.

In this embodiment, the information acquirer 11 also acquires water pipe construction-related information related to water pipe construction in addition to the water pipe-related information. The process time calculator 21 calculates the process time by using the water pipe-related information and the water pipe construction-related information acquired by the information acquirer 11.

Accordingly, a process plan of water pipe construction can be created by using the water pipe construction-related information related to water pipe construction in addition to the water pipe-related information. Thus, the process plan of water pipe construction can be more accurately created.

In this embodiment, the water pipe construction-related information includes on-ground-related information including information related to on-ground of a place where water pipes W are buried, and underground-related information including information related to underground of the place where the water pipes W are buried.

Accordingly, a process time of each process of water pipe construction can be calculated in consideration of the on-ground-related information and the underground-related information significantly affecting water pipe construction. Thus, the process plan of water pipe construction can be more accurately created.

In this embodiment, the on-ground-related information includes on-ground periphery-related information related to a periphery of on-ground of the place where the water pipes W are buried, and road situation-related information related to a road situation of the place where the water pipes W are buried.

Accordingly, a process time of each process of water pipe construction can be calculated in consideration of the on-ground periphery-related information and the road situation-related information in the on-ground-related information significantly affecting water pipe construction. Thus, the process plan of water pipe construction can be more accurately created.

In this embodiment, the underground-related information includes information related to at least one of an underground obstacle, a road structure, soil quality, or groundwater.

Accordingly, a process time of each process of water pipe construction can be calculated in consideration of information related to at least one of an underground obstacle, a road structure, soil quality, or groundwater significantly affecting water pipe construction. Thus, the process plan of water pipe construction can be more accurately created.

In this embodiment, the process time calculator 21 may calculate the spare time in each process of water pipe construction based on the water pipe-related information and the water pipe construction-related information. The process plan creator 31 may create a process plan of at least a part of the water pipe construction in consideration of the spare time as well as the process time of each process.

In the manner described above, even in cases such as a case where the process is changed because of an unexpected underground buried object and a case where the process is changed because of on-ground situations (such as a case where there is a time zone in which construction cannot be conducted at an entrance of a parking lot or a store), a process plan of water pipe construction can be created in consideration of a risk of such cases. Thus, the process plan of water pipe construction can be more accurately created.

In this embodiment, the information acquirer 11 may acquire construction suspension-related information related to a date when no water pipe construction is performed, as the water pipe construction-related information. The process plan creator 31 may create a process plan of at least a part of water pipe construction by using the construction suspension-related information acquired by the information acquirer 11 and the process time of each process calculated by the process time calculator 21.

Accordingly, a process of water pipe construction can be created except for a period or a time zone in which water pipe construction is suspended. Thus, the process plan of water pipe construction can be more accurately created.

### (Process plan creation method)

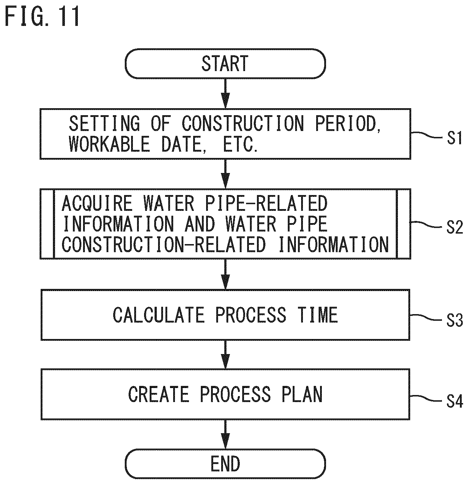

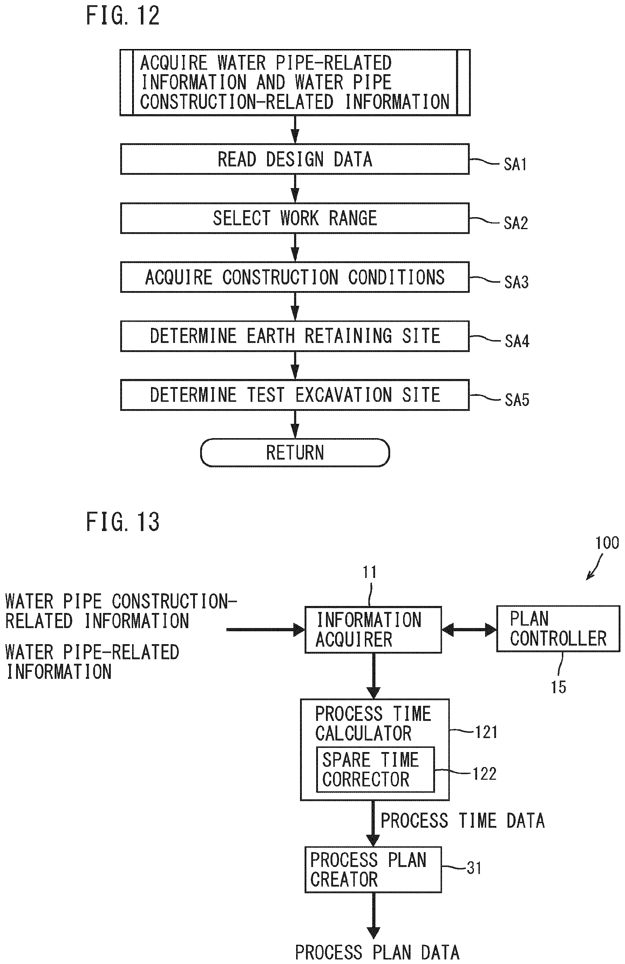

A process plan creation method executed by the process plan creation system 1 having the configuration described above will now be described with reference to FIGS. 11 and 12. FIG. 11 is a flowchart schematically showing the process plan creation method. FIG. 12 is a flowchart schematically showing a method for acquiring water pipe-related information and water pipe construction-related information in the process plan creation method.

As shown in FIG. 11, first, the information acquirer 11 of the process plan creation system 1 acquires a construction period and a workable date (step S1). The construction period and the workable date may be input to the process plan creation system 1, for example, or the process plan creation system 1 may acquire the information from another system or a memory device.

Next, in step S2, the information acquirer 11 acquires water pipe-related information and water pipe construction-related information. Specifically, as shown in the flowchart of FIG. 12, the information acquirer 11 acquires water pipe-related information and water pipe construction-related information.

First, in step SA1, the information acquirer 11 reads pipe design date of water pipes. The information acquirer 11 reads the design data from another system, a memory device, or other devices, for example. The design data is data related to at least one of the size (diameter and length), type, number, or arrangement of water pipes and is obtained by pipe conduit design of water pipes. That is, the information acquirer 11 acquires the water pipe-related information. It should be noted that the design data may include on-ground-related information on a periphery of the pipe conduit of water pipes.

Thereafter, in step SA2, the plan controller 15 selects a work range that is an input range of construction conditions in step SA3. The work range selected by the plan controller 15 is input to the information acquirer 11. Selection of the work range may be performed by input to the information acquirer 11 or may be performed by using a work range set in another system or a memory device.

The work range may be a range of the entire pipe conduit on which water pipe construction is performed, or may be a range of only a part of the pipe conduit. The information acquirer 11 may select the work range by selecting a start point and an end point of the pipe conduit.

Subsequently, in step SA3, the information acquirer 11 acquires construction conditions of water pipes in the work range selected in step SA2. The construction conditions include water pipe construction-related information. That is, the construction conditions include information related to on-site conditions, on-ground-related information, and underground-related information.

The information related to on-site conditions includes information on at least one of a workable time, the number of available persons, the type and number of work machines used, feasibility of parallel work, feasibility of parallel use of work machines, the conveyance time of soil or water pipes, or other information.

The on-ground-related information includes traffic information in a plate where water pipe construction is performed and, in a case where the water pipe construction is performed on a road, information on at least one of the width and the number of lanes of the road, or environments (houses, stores, etc.) near a place where water pipe construction is performed.

The underground-related information includes information related to at least one of an underground obstacle (underground structures such as crossing pipes, other underground buried objects, etc.), a road structure, soil quality, or groundwater. The underground-related information may include information related to the type, size, position, and so forth of the underground obstacle. The underground-related information may include information related to road structures such as the thickness and characteristics of pavement and subgrade. The underground-related information may include information related to soil quality (sand, silt, clay, etc.) at the excavation position. The underground-related information may include information related to the position and amount of groundwater. The underground-related information may include information related to necessity of earth retaining, an earth retaining method (sheet piles, shore struts, etc.), an earth retaining technique (installation, driving, etc.), and the range of earth retaining.

In step SA4, the plan controller 15 determines whether earth retaining is performed or not and the range of the earth retaining, from the underground-related information acquired by the information acquirer 11. Specifically, the plan controller 15 determines whether earth retaining is performed or not and the range of the earth retaining based on information of underground soil quality and groundwater, for example. The information related to earth retaining determined by the plan controller 15 is input to the information acquirer 11 as the water pipe construction-related information.

Thereafter, in step SA5, the plan controller 15 determines whether test excavation is performed or not and a test excavation site from the underground-related information acquired by the information acquirer 11, for example. Specifically, the plan controller 15 determines whether test excavation is performed or not and a test excavation site, based on information on, for example, an underground obstacle and so forth. The information related to test excavation determined by the plan controller 15 is input to the information acquirer 11 as the water pipe construction-related information. Then, the process plan creation system 1 returns to the flowchart of FIG. 11, and performs the process of step S3.

Step SA4 may not be performed by a process plan creation method. Step SA5 may not be performed by the process plan creation method.

In step S3 in the flowchart of FIG. 11, the process time calculator 21 calculates a process time of each process in water pipe construction based on the water pipe-related information and the water pipe construction-related information acquired in step S2. Specifically, the process time calculator 21 calculates a work time necessary for burying one water pipe, based on the water pipe-related information and the water pipe construction-related information, for example. The method for calculating the work time by the process time calculator 21 may be any method.

In next step S4, the process plan creator 31 creates a daily process plan and a monthly process plan by using information on the process time of each process calculated by the process time calculator 21, and information such as the construction period, the workable date, and so forth acquired by the information acquirer 11 in step S1, for example. Specifically, the process plan creator 31 creates a process plan by combining the process times such that the daily process is completed in one day and the total water pipe construction is completed by performing work in the workable dates within the construction period. At this time, the process plan creator 31 creates a process plan to efficiently facilitate the work depending on whether parallel work is performed or not, the number and conveyance time of work machines, and so forth.

Step S2 corresponds to an information acquisition step, step S3 corresponds to a process time calculation step, and step S4 corresponds to a process plan creation step.

A water pipe construction process plan creation method according to this embodiment is a method for creating a process plan of water pipe construction. The process plan creation method includes: an information acquisition step of acquiring water pipe-related information related to at least one of a diameter, a length, a type, the number, or arrangement of water pipes used for the water pipe construction; a process time calculation step of calculating a process time including a work time of each process of the water pipe construction based on the water pipe-related information acquired in the information acquisition step; and a process plan creation step of creating a process plan of at least a part of the water pipe construction by using the process time of each process calculated in the process time calculation step.

With the method described above, the process time of each process of water pipe construction is calculated based on the water pipe-related information, and a process plan of at least a part of water pipe construction is created by using the calculated process time. Accordingly, the process plan of water pipe construction can be automatically created easily.

### (Program for creating process plan of water pipe construction)

A program according to an embodiment of the present teaching only needs to be a program that causes a computer constituting the process plan creation system 1 to perform steps S1 through S4 shown in FIG. 11. This program is performed by the computer constituting the process plan creation system 1 to thereby obtain the process plan creation system 1 and the process plan creation method according to this embodiment. In this case, the computer constituting the process plan creation system 1 may be a general-purpose computer or a dedicated computer. The computer incorporates a central processing unit (CPU), for example, and performs calculation by the CPU.

In this embodiment, data acquired by the process plan creation system 1 and a calculation result obtained by the process plan creation system 1 are stored in an unillustrated memory device. In the case of performing calculation by using data stored in the memory device, the process plan creation system 1 reads the data and performs calculation. The memory device is constituted by a storage medium including a memory device such as a memory or a hard disk.

The program for creating a process plan of water pipe construction according to this embodiment is a program for creating a process plan of water pipe construction. This program causes a computer to acquire water pipe-related information related to at least one of the diameter, length, type, number, or arrangement of water pipes W used for water pipe construction, to calculate a process time including a work time of each process of water pipe construction based on the acquired water pipe-related information, and to create a process plan of at least a part of water pipe construction by using the calculated process time of each process.

With this configuration, the process time of each process of water pipe construction is calculated based on the water pipe-related information, and a process plan of at least a part of water pipe construction is created by using the calculated process time. Accordingly, the process plan of water pipe construction can be automatically created easily.

### (Variations)

Next, a variation of the process plan creation system 1 with the configuration described above will be described with reference to FIG. 13. FIG. 13 is a functional block diagram illustrating a schematic configuration of a process plan creation system 100 according to this variation. A configuration of the process plan creation system 100 according to this variation is different from the configuration of the process plan creation system 1 according to the first embodiment in that the process time calculator 121 includes a spare time corrector 122. Therefore, in the following description, components similar to those of the first embodiment are denoted by the same reference characters, and only components different from those of the first embodiment will be described.

The process time calculator 121 calculates a spare time in each process of water pipe construction, and corrects the spare time depending on past performance of water pipe construction. Specifically, the process time calculator 121 includes the spare time corrector 122.

The spare time corrector 122 corrects the spare time depending on past performance of water pipe construction. Specifically, the spare time corrector 122 corrects the spare time of water pipe construction for which a process plan is created, by using actual values of parameters of water pipe construction-related information, which differs among construction sites of water pipe construction. The spare time corrector 122 also corrects the spare time in consideration of a case where water pipe construction cannot be performed because of the weather of seasons such as rainy season or snowfall season. In this manner, the spare time corrector 122 corrects the spare time based on information related to past performance including situations of construction sites of water pipe construction, the weather of past construction periods, and so forth. Accordingly, calculation accuracy of the spare time can be increased.

As described above, in this variation, the process time calculator 121 includes the spare time corrector 122 that corrects the spare time in each process of water pipe construction based on past performance.

Accordingly, the spare time in each process of water pipe construction can be accurately obtained based on past performance. For example, since parameters related to water pipe construction differ among construction sites, the spare time is corrected in accordance with the parameters so that past performance can be reflected on the spare time. In addition, the spare time is corrected based on information such as past weather data in periods of water pipe construction, and thus, the spare time can be more accurately obtained.

Thus, the process plan of water pipe construction can be more accurately created by using the corrected spare time.

### [Second Embodiment]

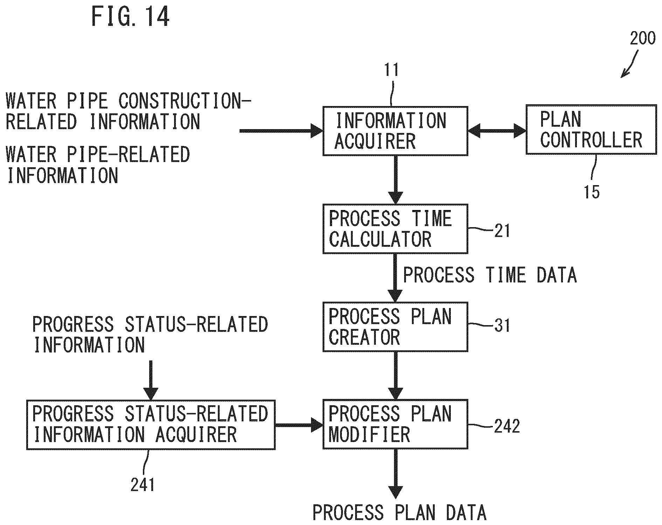

FIG. 14 is a functional block diagram illustrating a schematic configuration of a process plan creation system 200 according to a second embodiment. The process plan creation system 200 according to the second embodiment is different from the process plan creation systems 1 and 100 according to the first embodiment in modifying a process plan in accordance with a progress status of water pipe construction. Thus, in the following description, components similar to those of the first embodiment are denoted by the same reference characters and will not be described again, and only components different from those of the first embodiment will be described.

The process plan creation system 200 includes an information acquirer 11, a plan controller 15, a process time calculator 21, a process plan creator 31, a progress status-related information acquirer 241, and a process plan modifier 242.

The progress status-related information acquirer 241 acquires progress status-related information of water pipe construction. The progress status-related information is information related to a progress status of water pipe construction, such as construction record data, process data, and construction management data. The progress status-related information acquirer 241 may acquire the progress status-related information from an unillustrated construction information system for managing construction information or may acquire the progress status-related information by input, for example.

The process plan modifier 242 modifies a process plan created by the process plan creator 31, based on the progress status-related information acquired by the progress status-related information acquirer 241. The process plan modifier 242 outputs the modified process plan data.

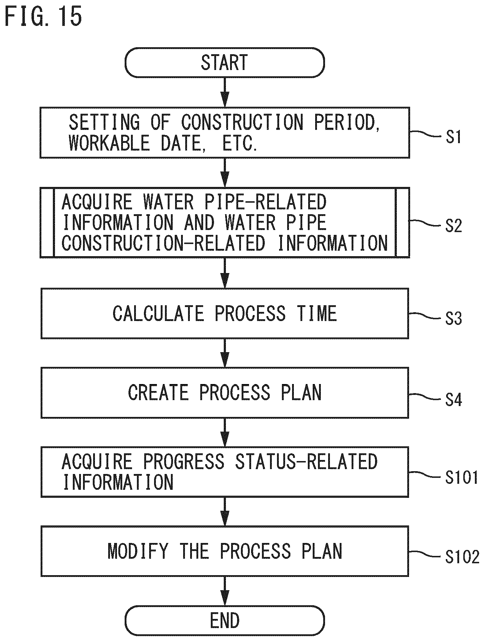

FIG. 15 shows a flowchart of a process plan creation method performed by the process plan creation system 200 with the configuration described above. As shown in FIG. 15, steps S1 through S4 of the process plan creation method executed by the process plan creation system 200 are the same as steps S1 through S4 of the process plan creation method executed by the process plan creation system 1 according to the first embodiment. Thus, steps S1 through S4 will not be described here.

After the process plan creator 31 creates a process plan in step S4, the progress status-related information acquirer 241 acquires progress status-related information in step S 101. Next, in step S102, the process plan modifier 242 modifies the process plan based on the progress status-related information. Thereafter, the process plan modifier 242 outputs the modified process plan.

In this embodiment, the process plan creation system 200 includes the progress status-related information acquirer 241 that acquires the progress status-related information related to a progress status of water pipe construction, and the process plan modifier 242 that modifies the process plan created by the process plan creator 31 by using the progress status-related information acquired by the progress status-related information acquirer 241.

Accordingly, the process plan of water pipe construction can be modified depending on the actual progress status of water pipe construction. With the configuration of the process plan creation system 200 according to this embodiment, in a case where water pipe construction cannot be performed because of the influence of the weather such as rain, for example, the process plan can be modified to recover a delay of construction. Thus, the process plan of water pipe construction can be more accurately created in accordance with an actual situation.

### (Other Embodiments)

The embodiments of the present teaching have been described above, but the above embodiments are merely examples for carrying out the teaching. Thus, the teaching is not limited to the embodiments, and the embodiments may be modified as necessary within a range not departing from the gist of the teaching.

In the embodiments, the process plan creation system 1 includes the plan controller 15. Alternatively, the process plan creation system may not include the plan controller, and may acquire construction conditions necessary for creating a process plan of water pipe construction in information not obtained by the information acquirer 11 by input or may acquire the construction conditions from data stored in a memory device or other devices beforehand.

In the embodiments, the water pipe construction-related information includes information related to on-site conditions, on-ground-related information, and underground-related information. Alternatively, the water pipe construction-related information may not include the information related to on-site conditions. The water pipe construction-related information may not include the on-ground-related information. The water pipe construction-related information may not include the underground-related information.

In the embodiments, the on-ground-related information includes on-ground periphery-related information and road situation-related information. Alternatively, the on-ground-related information may not include the on-ground periphery-related information. The on-ground-related information may not include the road situation-related information.

In the embodiments, the process time calculator 21 calculates a process time including a work time of each process of water pipe construction, based on the water pipe-related information and the water pipe construction-related information. Alternatively, the process time calculator may calculate a process time including a work time of each process of water pipe construction based on the water pipe-related information. The process time calculator may calculate a process time including a work time of each process of water pipe construction based on the water pipe construction-related information.

In the embodiments, the process time calculator 21 calculates the spare time in each process of water pipe construction based on the water pipe-related information and the water pipe construction-related information. Alternatively, the process time calculator may calculate the spare time in each process of water pipe construction based on the water pipe-related information. The process time calculator may calculate the spare time in each process of water pipe construction based on the water pipe construction-related information.

In the embodiments, each of the process plan creation systems 1, 100, and 200 creates and outputs a process plan of water pipe construction of burying water pipes in the ground. Alternatively, the process plan creation system may create a process plan of water pipe construction including not only burying the water pipes but also burying of parallel pipes arranged in parallel with the water pipes.

In the embodiments, each of the process plan creation systems 1, 100, and 200 creates a process plan of water pipe construction. Alternatively, the process plan creation system may create documents including a construction management plan as well as the process plan to be submitted to a waterworks organization. The process plan creation system may visualize data to be managed during construction, such as a work table, a construction management table, and an inventory management table. The process plan creation system may automatically create a process table and a construction daily report. The process plan creation system may automatically create documents after construction, such as an execution timetable.

In the embodiments, each of the process plan creation systems 1, 100, and 200 creates a process plan in the case of performing water pipe construction by an excavation technique for excavating the ground. Alternatively, the process plan creation system may create a process plan in the case of performing water pipe construction by a non-excavation technique used for, for example, arranging water pipes in a tunnel. In this case, the process plan creation system creates a process plan based on a process suitable for water pipe construction of the non-excavation technique.

In the second embodiment, the process plan creation system 200 modifies the process plan of water pipe construction in accordance with an actual progress status of water pipe construction. Alternatively, the process plan creation system may recommend staff and work machines necessary for a target construction period. Such recommendation may be performed by the process plan creation system according to the first embodiment.

### INDUSTRIAL APPLICABILITY

The present teaching is applicable to a process plan creation system that creates a process plan of water pipe construction.

### REFERENCE MARKS IN THE DRAWINGS

- 1, 100, 200: process plan creation system
- 11: information acquirer
- 15: plan controller
- 21: process time calculator
- 31: process plan creator
- 121: process time calculator
- 122: spare time corrector
- 241: progress status-related information acquirer
- 242: process plan modifier
- W: water pipe
- L: trench
- M: work machine
- P: sheet pile
- R: road
- R1: surface layer
- R2: upper subgrade
- R3: lower subgrade
- R4: roadbed

## Claims

1. A water pipe construction process plan creation system that is a process plan creation system that creates a process plan of water pipe construction, the process plan creation system comprising:
an information acquirer that acquires water pipe-related information related to at least one of a diameter, a length, a type, the number, or arrangement of water pipes used for the water pipe construction;
a process time calculator that calculates a process time including a work time of each process of the water pipe construction based on the water pipe-related information acquired by the information acquirer; and
a process plan creator that creates a process plan of at least a part of the water pipe construction by using the process time of each process calculated by the process time calculator.

2. The water pipe construction process plan creation system according to claim 1, wherein
the information acquirer acquires water pipe construction-related information related to the water pipe construction, in addition to the water pipe-related information, and
the process time calculator calculates the process time by using the water pipe-related information and the water pipe construction-related information acquired by the information acquirer.

3. The water pipe construction process plan creation system according to claim 2, wherein
the water pipe construction-related information includes
on-ground-related information including information related to on-ground of a place where the water pipes are buried, and
underground-related information including information related to underground of the place where the water pipes are buried.

4. The water pipe construction process plan creation system according to claim 3, wherein
the on-ground-related information includes
on-ground periphery-related information related to a periphery of on-ground of the place where the water pipes are buried, and
road situation-related information related to a road situation of the place where the water pipes are buried.

5. The water pipe construction process plan creation system according to claim 3 or 4, wherein
the underground-related information includes information related to at least one of an underground obstacle, a road structure, soil quality, or groundwater.

6. The water pipe construction process plan creation system according to any one of claims 2 to 5, wherein
the process time calculator calculates a spare time in each process of the water pipe construction based on the water pipe-related information and the water pipe construction-related information, and
the process plan creator creates a process plan of at least a part of the water pipe construction in consideration of the spare time as well as the process time of each process.

7. The water pipe construction process plan creation system according to claim 6, wherein
the process time calculator includes a spare time corrector that corrects the spare time in each process of the water pipe construction based on past performance.

8. The water pipe construction process plan creation system according to any one of claims 2 to 7, wherein
the information acquirer acquires construction suspension-related information related to a date when no water pipe construction is performed, as the water pipe construction-related information, and
the process plan creator creates a process plan of at least a part of the water pipe construction by using the construction suspension-related information acquired by the information acquirer and the process time of each process calculated by the process time calculator.

9. The water pipe construction process plan creation system according to any one of claims 1 to 8, further comprising:
a progress status-related information acquirer that acquires progress status-related information related to a progress status of the water pipe construction; and
a process plan modifier that modifies the process plan created by the process plan creator, by using the progress status-related information acquired by the progress status-related information acquirer.

10. A process plan creation method for creating a process plan of water pipe construction, the process plan creation method comprising:
an information acquisition step of acquiring water pipe-related information related to at least one of a diameter, a length, a type, the number, or arrangement of water pipes used for the water pipe construction;
a process time calculation step of calculating a process time including a work time of each process of the water pipe construction based on the water pipe-related information acquired in the information acquisition step; and
a process plan creation step of creating a process plan of at least a part of the water pipe construction by using the process time of each process calculated in the process time calculation step.

11. A program for creating a process plan of water pipe construction, the program causing a computer
to acquire water pipe-related information related to at least one of a diameter, a length, a type, the number, or arrangement of water pipes used for the water pipe construction;
to calculate a process time including a work time of each process of the water pipe construction based on the acquired water pipe-related information; and
to create a process plan of at least a part of the water pipe construction by using the calculated process time of each process.
